# EUROPEAN PATENT APPLICATION

(11) **EP 2 442 465 A2**
(43) Date of publication of application: **18.04.2012**
(21) Application number: 11196181.9
(22) Date of filing: 31.12.2008
(51) Int. Cl.: H04H 60/58, H04H 60/80, H04H 60/31

(54) **Survey data acquisition**

(30) Priority: 31.12.2007 US 644907; 31.12.2007 US 980107 P
(62) Divisional of application: 08870133.9
(71) Applicant: Arbitron Inc., Columbia, MD 21046-1572 (US)
(72) Inventor: Crystal, JACK, COLUMBIA, MD Maryland 21046-1572 (US); Neuhauser, ALAN, COLUMBIA, MD Maryland 21046-1572 (US); Krug, WILLIAM, COLUMBIA, MD Maryland 21046-1572 (US)
(74) Representative: Tucker, Nigel P.

(57) **Abstract**

A monitor for data acquisition comprising a sensor portion and a communications portion being adapted to transmit a wireless signal related to an environmental signal detected by said sensor portion to an appliance, wherein said sensor portion and said communications portion are mutually mechanically coupled to a common substrate disposed within a battery compartment of said appliance.

## Description

### Background

Efforts to gauge and improve the effectiveness of communication activities, such as advertising activities, have long relied on gathering data from audience survey participants. Traditionally, such data gathering has involved the manual recording of media content consumption patterns by survey participants in participant diaries. Audience surveys have been conducted by providing selected and consenting members with record diaries and requiring that the audience members record their media consumption periodically over a particular time span. Unfortunately, survey participants often prove unreliable in their ability to maintain complete and accurate records of their media consumption activities. Record diaries may be forgotten or lost and, even when remembered, the significant discipline required to maintain accurate written records on a regular basis may be lacking. The metric of survey participant adherence to the data collection protocol of a survey is termed "compliance."

More recently, the development of miniaturized electronic technologies has permitted the automation of some data collection functions useful in the study of audience media consumption. Compliance is generally improved by such automation of data collection. The most sophisticated automated systems, however, still require positive action by survey participants to enable full compliance with survey protocols. In particular, existing data sensing and collection devices require periodic battery charging, data transfer connection and, most fundamentally, require that the survey participant carry the data sensing a collection device on his or her person. In practice, compliance is therefore limited by the willingness or capacity of the survey participant to properly remember and employ a Monitoring device.

Consequently, despite various advances, effectively capturing complete and accurate information regarding audience media consumption remains difficult. Despite the ongoing efforts of many creative practitioners of skill in the art, this problem has remained unsolved until now.

### Summary

Collecting data reflecting usage of media is rendered difficult by technical and human factors. As the variety of media sources and techniques for presenting media to consumers, and the numbers and types of media presentation venues, increase over time, the volume and scope of usage data to be collected increases. Concurrently this expansion of available information, and other daily demands, serves diminish available time and otherwise demotivate survey participants from providing data through conventional channels.

Dedicated portable Monitoring devices have been developed including the hardware and software required to Monitor exposure to audio media. In the course of developing the present invention, the inventors have understood the limitations of such dedicated Monitoring devices including device expense, limited user interface and processing facilities, and difficulties and costs associated with the process of upgrading Monitoring devices. In addition, through diligent effort in the inventors have developed compliance incentives where other creative practitioners using dedicated portable Monitoring devices have failed.

Accordingly, in various embodiment of the invention includes a Monitor device having a wireless communication facility. In one embodiment the wireless communication facility includes a Bluetooth communication facility. In another embodiment, the wireless mitigation facility includes an IEEE 802.11 WiFi communication facility.

In various embodiments of the invention, the Monitor device is adapted to communicate with an appliance having a corresponding wireless communication facility. Accordingly, in one embodiment the Monitor is adapted to communicate with a Bluetooth-enabled smart phone device. In another embodiment of the invention the Monitor device is adapted to communicate with a WiFi equipped appliance. In one embodiment of the invention, wireless communication facility equipped appliance is a substantially stationary appliance such as a desktop personal computer. In one embodiment of the invention, a plurality of monitors are adapted to communicate with a single wireless-enabled appliance.

In various embodiment of the invention, the appliance is adapted to receive survey data from the Monitor device and forward a signal corresponding to the survey data to a collection device. In one embodiment of the invention, the appliance is adapted to forward survey data through a communications network such as, for example, a cellular telephone communications network.

These and other advantages and features of the invention will be more readily understood in relation to the following detailed description of the invention, which is provided in conjunction with the accompanying drawings.

### Brief Description of the Drawings

Fig. 1 shows, in block diagram form, a portion of an exemplary data collection system according to one embodiment of the invention;
Fig. 2 shows, in block diagram form, a further portion of an exemplary data collection system according to one embodiment of the invention;
Fig. 3A shows, in exploded perspective view, a portion of a hybrid Monitor device including a power supply device according to one embodiment of the invention;
Fig. 3B shows, in exploded perspective view a portion of a hybrid Monitor device according to another embodiment of the invention;
Fig. 3C shows, in cutaway cross-section, a portion of a hybrid Monitor device including an electrical contact according to one embodiment of the invention;
Fig. 4A shows, in perspective view, a portion of a hybrid Monitor device including a flush cover according to a further embodiment of the invention;
Fig. 4B shows, in perspective view, a portion of a hybrid Monitor device including an extended cover according to a further embodiment of the invention;
Fig. 5 shows, in exploded perspective view, a portion of a hybrid Monitor device including a cover portion according to one embodiment of the invention;
Fig. 6 shows, in perspective view, a portion of a hybrid Monitor device according to a further embodiment of the invention;
Fig. 7 shows, in block diagram form, a portion of a hybrid Monitor device including a communication port device according to one embodiment of the invention;
Fig. 8 shows, in block diagram form, a portion of a hybrid Monitor device including a power port device according to one of one of the invention;
Fig. 9 shows, in exploded perspective view, a wireless hybrid Monitor device according to one embodiment of the invention;
Fig. 10 shows, in exploded perspective view, a hybrid Monitor device including a holster portion according to one embodiment of the invention;
Fig. 11 shows, in cutaway perspective view, a portion of a hybrid Monitor device including a communication port according to one embodiment of the invention;
Fig. 12A shows, in perspective view, a portion of a hybrid Monitor device according to a further embodiment of the invention;
Fig. 12B shows, in perspective view, a portion of a hybrid Monitor device according to still another embodiment of the invention;
Fig. 13 shows, in perspective view, portion of a hybrid Monitor device in a jewelry casing according to another embodiment of the invention;
Fig. 14 shows, in cutaway perspective view, a portion of a hybrid Monitor device in an accessory enclosure, according to another embodiment of the invention;
Fig. 15 shows, in perspective view, a portion of a wireless earpiece including a portion of a hybrid Monitor device according to still another embodiment of the invention;
Fig. 16 shows, in system diagram form, a data collection system including an ear piece based hybrid Monitor device according to one abundant of the invention;
Fig. 17 shows a matrix representing the preparation of a signal by a fast Fourier transform operation according to a portion of one embodiment of the invention; and
Fig. 18 shows a main system diagram form, a portion of a data acquisition system including a plurality of Monitor devices according to one embodiment of the invention.

### Detailed Description

Having carefully considered the factors discussed above and, from this consideration, having developed a new understanding of the underlying problems and conditions, the inventors have arrived at new and effective solutions embodied in the invention as described below. This description is provided to enable any person skilled in the art to make and use the disclosed inventions and sets forth the best modes presently contemplated by the inventors of carrying out their inventions. In the following description, for purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present inventions.

Various terms relied upon in disclosing the present invention are defined as follows:
The terms "first," "second," "primary," and "secondary" are used herein to distinguish one element, set, data, object, step, process, function, action or thing from another, and are not used to designate relative position, arrangement in time or relative importance, unless otherwise stated explicitly.

The terms "coupled", "coupled to", and "coupled with" as used herein each mean a relationship between or among two or more devices, apparatus, files, circuits, elements, functions, operations, processes, programs, media, components, networks, systems, subsystems, and/or means, constituting any one or more of (a) a connection, whether direct or through one or more other devices, apparatus, files, circuits, elements, functions, operations, processes, programs, media, components, networks, systems, subsystems, or means, (b) a communications relationship, whether direct or through one or more other devices, apparatus, files, circuits, elements, functions, operations, processes, programs, media, components, networks, systems, subsystems, or means, and/or (c) a functional relationship in which the operation of any one or more devices, apparatus, files, circuits, elements, functions, operations, processes, programs, media, components, networks, systems, subsystems, or means depends, in whole or in part, on the operation of any one or more others thereof.

The terms "communicate", and "communicating" as used herein include both conveying data from a source to a destination, and delivering data to a communications medium, system, channel, device, wire, cable, fiber, circuit or link to be conveyed to a destination, and the term "communication" as used herein means data so conveyed or delivered. The term "communications' as used herein includes one or more of a communications medium, system, channel, device, wire, cable, fiber, circuit and link.

The term "processor" as used herein means processing devices, apparatus, programs, circuits, components, systems and subsystems, whether implemented in hardware, software or both, and whether or not programmable. The term "processor" as used herein includes, but is not limited to computers, hardwired circuits, signal modifying devices and systems, devices and machines for controlling systems, central processing units, programmable devices, field programmable gate arrays, application specific integrated circuits, systems on a chip, systems comprised of discrete elements and circuits, state machines, virtual machines and combinations of any of the foregoing.

The terms "panelist," "panel member" and "participant" are interchangeably used herein to refer to a person who is, knowingly or unknowingly, participating in a study to gather information, whether by electronic, survey or other means, about that person's activity.

The term "portable user Appliance" (also referred to herein, for convenience, by the abbreviation "PUA") as used herein means an electrical or non-electrical device capable of being carried by or on the person of a user or capable of being disposed on or in, or held by, a physical object (e.g., attaché, purse) capable of being carried by or on the user, and having at least one function of primary benefit to such user, including without limitation, a cellular telephone, a personal digital assistant ("PDA"), a Blackberry device, a radio, a television, a game system (e.g., a Gameboy ^{®} device), a notebook computer, a laptop computer, a GPS device, an iPod ^{®} device, a DVD player, a walkie talkie, a personal communications device, a telematics device, a remote control device, a wireless headset, a wristwatch, a portable data storage device (e.g., Thumb ™ drive), a camera, a recorder, a keyless entry transmitter device, a ring, a comb, a pen, a pencil, a notebook, a wallet, a tool, an implement, a pair of glasses, an article of clothing, a belt, a belt buckle, a fob, an article of jewelry, an ornamental article, a pair of shoes or other foot garment (e.g., sandals), a jacket, and a hat, as well as any devices combining any of the foregoing or their functions.

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of corresponding information in a different physical form or forms.

The terms "media data" and "media" as used herein mean data which is widely accessible, whether over-the-air, or via cable, satellite, network, internetwork (including the Internet), print, displayed, distributed on storage media, or by any other means or technique that is humanly perceptible, without regard to the form or content of such data, and including but not limited to audio, video, text, images, animations, databases, files, broadcasts, displays (including but not limited to video displays, posters and billboards), signs, signals, web pages, print media and streaming media data.

The term "presentation data" shall mean media data or content other than media data to be presented to a user.

The term "research data" as used herein means data comprising (1) data concerning usage of media, (2) data concerning exposure to media, and/or (3) market research data.

The term "power supply device" as used herein includes both an energy storage device and an energy conversion devices such as, for example, one or more of a disposable electrochemical battery, a rechargeable electrochemical battery, a fuel cell, a capacitive power storage device, a miniature heat engine such as a micro-electro-mechanical system (MEMS) turbine, a miniature generator such as a hand-crank generator, and a electromagnetic energy capture device such as a photovoltaic device, among others known in the art.

Effective data collection is enhanced by reliable technical data collection and reliable participant compliance. In various aspects, the present invention includes features that enhance both the quality of technical data collection and the quality of participant compliance.

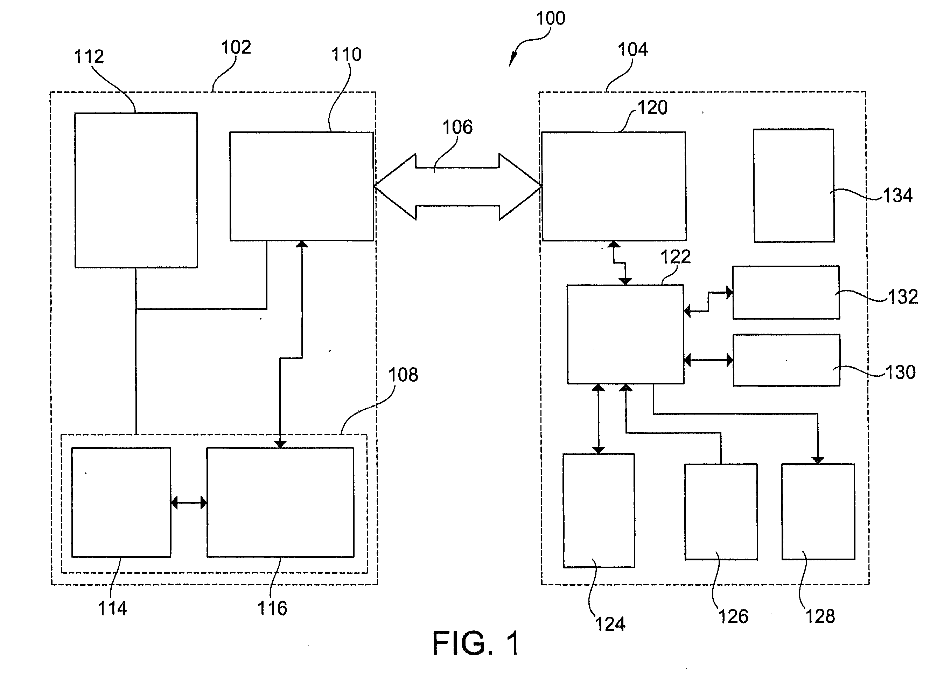

One embodiment of a system according to the invention includes a combination of a research data Monitor (*hereinafter* a Monitor) and a Personal User Appliance (*hereinafterAppliance*) as shown in figure 1. It should be noted that while the Appliance shown in figure 1 may be a mobile device, such as a cellular phone or a PDA style Smart-Phone, this illustrative example should be considered in no way limiting. As noted above, one of ordinary skill in the art will understand that a wide variety of devices are readily adaptable for use as an Appliance in the context of the present invention.

Figure 1 shows, in overview block diagram form, a portion of an exemplary hybrid Monitor device 100 for a data collection system including a Monitor 102 and an Appliance 104 such as a cellular phone. A data link is adapted to communicate a signal 106 between the Monitor 102 and the Appliance 104.

In the illustrated embodiment, the Monitor 102 includes a sensor portion 108, a communications device 110 and a power source 112. As illustrated, the sensor portion 108 includes a transducer 114 and a signal conditioner 116.

The illustrated Appliance 104 includes exemplary components such as a communications portion 120, a processor 122, a memory device 124, a microphone 126, a speaker 128, a display device 130, an input device 132 such as a keyboard, and a power source 134. In certain embodiments, memory device 124 includes a single integrated circuit device, while in others it includes multiple integrated circuit devices. In certain embodiments, a single integrated circuit implements certain functions of both processor 122 and storage memory device 124. More generally, one of skill in the art will appreciate that the illustrated components are merely exemplary of many components and arrangements available in the wide variety of Appliances previously presented to the market or likely to become available in the future.

In operation, the illustrated system receives a signal at transducer 114. According to one embodiment of the invention, the Monitor 102 is used to capture data related to media content consumption. In such a case, the transducer is, for example, a microphone and the signal is an audible or inaudible sonic signal. According to the illustrated embodiment, the transducer produces a raw signal, such as an electrical signal, related to the sonic signal. The electrical signal is received by the signal conditioner 116 which transforms the electrical signal to produce a conditioned signal. It one embodiment of the invention, transformation of the raw signal into the condition single includes analog-to-digital conversion of the raw signal from an analog raw signal to a digital signal. In various embodiments, one or more of the analog and digital signals undergoes additional signal conditioning and/or other processing within the signal conditioner 116.

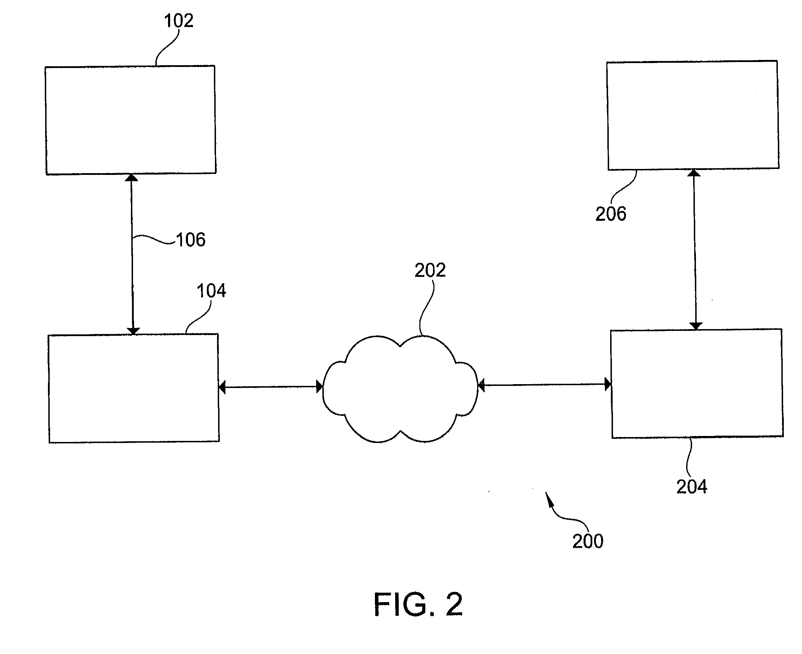

Communication device 110 receives the conditioned signal and produces an output signal 106. In one embodiment of the invention, signal 106 is a Bluetooth protocol signal. In another embodiment of the invention signal 106 is a WiFi (IEEE 802.11) protocol signal. One of ordinary skill in the art will appreciate that signal 106 may include any of a variety of communication protocols for which corresponding communications capability exists in the Appliance 104. The output signal 106 is received as a received signal at an input of communication device 120 of the Appliance 104. In various embodiments, the Appliance 104 may perform additional signal conditioning and/or storage of the received signal. In other embodiments, the Appliance 104 is adapted to transmit the received signal and/or its information content to a further device as shown, for example, in figure 2 and discussed below.

In certain embodiments, processor 122 is operative to execute applications ancillary or unrelated to the conduct of environmental sensing, such as applications serving to download audio and/or video data to be reproduced by the Appliance 104, e-mail clients and applications enabling the user to play games using the Appliance 104. In further embodiments, the Appliance 104 provides text messaging and/or web access through its wireless communications capabilities, providing access to other content. For example, Internet access by the Appliance 104 enables access to songs, video on demand, video clips and streaming media. In certain embodiments, memory device 124 stores software providing audio and/or video downloading and reproducing functionality, such as iPod ^{®} software, enabling the user to reproduce audio and/or video content downloaded from a source, such as a personal computer or through direct Internet access, via communications device 120.

In certain embodiments, processor 122 includes two or more processing devices, such as a first processing device (for example a digital signal processor) that processes audio, and a second processing device that exercises overall control over operation of the Appliance 104. In certain embodiments, processor 122 employs a single processing device. In certain embodiments, some or all of the functions of processor 122 are implemented by hardwired circuitry and in other embodiments, the functions are implemented by a cooperation of software and hardware elements, in a manner such as is well known in the art.

To enable Appliance 104 to receive research data from the Monitor device 102 (e.g., data indicating exposure to audio such as programs, music and advertisements), in certain embodiments specialized software, referred to here as research software, is installed in memory device 120 to control the processor 122. Responsive to execution of this software, the Appliance 104 gathers research data and communicates it via communication device 120 to a research organization. In certain embodiments the research software also controls processor 122 to store the data for subsequent communication. In one embodiment of the invention data stored by processor 122 for subsequent communication is stored in memory device 124.

In certain embodiments, the research software controls the processor 122 to decode ancillary codes in the transduced audio from microphone 114 using one or more of known techniques, as discussed in additional detail below, and then to store and/or communicate the decoded data for use as research data indicating encoded audio to which a survey participant is exposed.

In certain embodiments, the research software controls the processor 122 to extract signatures from the transduced audio from microphone 114 using one or more of the known techniques identified below, and then to store and/or communicate the extracted signature data for use as research data to be matched with reference signatures representing known audio to detect the audio to which the user was exposed. In certain embodiments, the research software both decodes ancillary codes in the transduced audio and extracts signatures therefrom for identifying the audio to which the user was exposed. In certain embodiments, the research software controls the processor 122 to store samples of the transduced audio, either in compressed or uncompressed form for subsequent processing either to decode ancillary codes therein or to extract signatures therefrom. In certain ones of these embodiments, the compressed or uncompressed audio is communicated to a remote processor for decoding and/or signature extraction.

One of skill in the art will appreciate the many advantages of a hybrid Monitor device according to the embodiment of the invention shown in figure 1. Effective data collection is enhanced by reliable technical data collection and reliable participant compliance. In various aspects, the illustrated embodiment includes features that enhance both the quality of technical data collection and the quality of participant compliance.

By providing two (or more) cooperating modules, the illustrated hybrid data Monitor takes advantage of economies of scale associated with the mass production of Appliances such as cellular telephones. For example, by using the keyboard and display available in an exemplary cellular telephone, the system acquires user interface functionality that at least is rendered less expensive by mass production, and at best may be available without cost as part of a user device already possessed by a survey participant. Resources conserved in this way can be devoted to providing uniform high quality components for subsystems that are, for example, more sensitive to component quality and variation. For example, the Monitor 102 can include a microphone 114 that is appropriately sensitive and that has substantially uniform characteristics from device to device. Since this level of uniformity and sensitivity might not be reliably found in an Appliance such as that identified as element 104 in figure 1, it is beneficial to have the Appliance 104 cooperate with a specialized Monitor device 102.

A review of available media content identification technology follows immediately below. This review clarifies, for example, the importance of sensitive and repeatable reception of a sonic signal in the context of the present invention.

Various monitoring techniques are suitable for use with a hybrid Monitor according to the present invention. For example, television viewing or radio listening habits, including exposure to commercials therein, are monitored utilizing a variety of techniques. In certain techniques, acoustic energy to which an individual is exposed is monitored to produce data which identifies or characterizes a program, song, station, channel, commercial, etc. that is being watched or listened to by the individual. Where audio media includes ancillary codes that provide such information, suitable decoding techniques are employed to detect the encoded information, such as those disclosed in US Patents No. 5,450,490 and No. 5,764,763 to Jensen, et al, U.S. Patent No. 5,579,124 to Aijala, et al., U.S. Patent Nos. 5,574,962, 5,581,800 and 5,787,334 to Fardeau, et al., U.S. Patent No. 6,871,180 to Neuhauser, et al., U.S. Patent No. 6,862,355 to Kolessar, et al., U.S. Patent No. 6,845,360 to Jensen, et al., U.S. Patent No. 5,319,735 to Preuss et al., US Patent No. 5,687,191 to Lee, et al., U.S. Patent No. 6,175,627 to Petrovich et al., U.S. Patent No. 5,828,325 to Wolosewicz et at., U.S. Patent No. 6,154,484 to Lee et al., U.S. Patent No. 5,945,932 to Smith et al., US 2001/0053190 to Srinivasan, US 2003/0110485 to Lu, et al., U.S. Patent No. 5,737,025 to Dougherty, et al., US 2004/0170381 to Srinivasan, and WO 06/14362 to Srinivasan, et al., all of which hereby are incorporated by reference in their entirety herein.

Examples of techniques for encoding ancillary codes in audio, and for reading such codes, are provided in Bender, et at., "Techniques for Data Hiding", IBM Systems Journal, Vol. 35, Nos. 3 & 4, 1996, which is incorporated herein in its entirety. Bender, et al. discloses a technique for encoding audio termed "phase encoding" in which segments of the audio are transformed to the frequency domain, for example, by a discrete Fourier transform (DFT), so that phase data is produced for each segment. Then the phase data is modified to encode a code symbol, such as one bit. Processing of the phase encoded audio to read the code is carried out by synchronizing with the data sequence, and detecting the phase encoded data using the known values of the segment length, the DFT points and the data interval.

Bender, et al. also describe spread spectrum encoding and decoding, of which multiple embodiments are disclosed in the above-cited Aijala, et al. US patent No. 5,579,124.

Still another audio encoding and decoding technique described by Bender, et al. is echo data hiding in which data is embedded in a host audio signal by introducing an echo. Symbol states are represented by the values of the echo delays, and they are read by any appropriate processing that serves to evaluate the lengths and/or presence of the encoded delays.

A further technique, or category of techniques, termed "amplitude modulation" is described in R. Walker, "Audio Watermarking", BBC Research and Development, 2004. In this category fall techniques that modify the envelope of the audio signal, for example by notching or otherwise modifying brief portions of the signal, or by subjecting the envelope to longer term modifications. Processing the audio to read the code can be achieved by detecting the transitions representing a notch or other modifications, or by accumulation or integration over a time period comparable to the duration of an encoded symbol, or by another suitable technique.

Another category of techniques identified by Walker involves transforming the audio from the time domain to some transform domain, such as a frequency domain, and then encoding by adding data or otherwise modifying the transformed audio. The domain transformation can be carried out by a Fourier, DCT, Hadamard, Wavelet or other transformation, or by digital or analog filtering. Encoding can be achieved by adding a modulated carrier or other data (such as noise, noise-like data or other symbols in the transform domain) or by modifying the transformed audio, such as by notching or altering one or more frequency bands, bins or combinations of bins, or by combining these methods. Still other related techniques modify the frequency distribution of the audio data in the transform domain to encode. Psychoacoustic masking can be employed to render the codes inaudible or to reduce their prominence. Processing to read ancillary codes in audio data encoded by techniques within this category typically involves transforming the encoded audio to the transform domain and detecting the additions or other modifications representing the codes.

A still further category of techniques identified by Walker involves modifying audio data encoded for compression (whether lossy or lossless) or other purpose, such as audio data encoded in an MP3 format or other MPEG audio format, AC-3, DTS, ATRAC, WMA, RealAudio, Ogg Vorbis, APT X100, FLAC, Shorten, Monkey's Audio, or other. Encoding involves modifications to the encoded audio data, such as modifications to coding coefficients and/or to predefined decision thresholds. Processing the audio to read the code is carried out by detecting such modifications using knowledge of predefined audio encoding parameters.

It will be appreciated that various known encoding techniques may be employed, either alone or in combination with the above-described techniques according to the present invention. Such known encoding techniques include, but are not limited to FSK, PSK (such as BPSK), amplitude modulation, frequency modulation and phase modulation.

In some cases a signature is extracted from transduced media data for identification by matching with reference signatures of known media data. Suitable techniques for this purpose include those disclosed in U.S. Patent No. 5,612,729 to Ellis, et al. and in U.S. Patent No. 4,739,398 to Thomas, et al., each of which is assigned to the assignee of the present application and both of which are incorporated herein by reference in their entireties.

Still other suitable techniques are the subject of U.S. Patent No. 2,662,168 to Scherbatskoy, U.S. Patent No. 3,919,479 to Moon, et al., U.S. Patent No. 4,697,209 to Kiewit, et al., U.S. Patent No. 4,677,466 to Lert, et al., U.S. Patent No 5,512,933 to Wheatley, et al., U.S. Patent No. 4,955,070 to Welsh, et al., U.S. Patent No. 4,918,730 to Schulze, U.S. Patent No. 4,843,562 to Kenyon, et al., U.S. Patent No. 4,450,551 to Kenyon, et al., U.S. Patent No. 4,230,990 to Lert, et al, U.S. Patent No. 5,594,934 to Lu, et al., European Published Patent Application EP 0887958 to Bichsel and PCT publication WO91/11062 to Young, et al., all of which are incorporated herein by reference in their entireties.

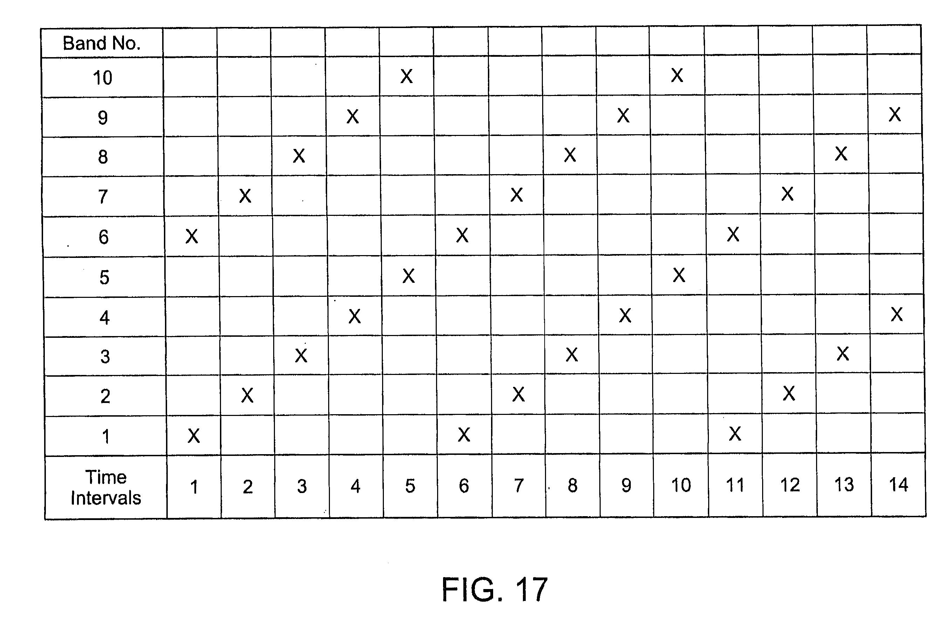

An advantageous signature extraction technique transforms audio data within a predetermined frequency range to the frequency domain by a transform function, such as an FFT. The FFT data from an even number of frequency bands (for example, eight, ten, sixteen or thirty two frequency bands) spanning the predetermined frequency range are used two bands at a time during successive time intervals. Figure 17 provides an example of how pairs of the bands are selected during successive time intervals where the total number of bands used is equal to ten. The selected bands are indicated by an "X".

When each band is selected, the energy values of the FFT bins within such band and such time interval are processed to form one bit of the signature. If there are ten FFT's for each interval of the audio signal, for example, the values of all bins of such band within the first five FFT's are summed to form a value "A" and the values of all bins of such band within the last five FFT's are summed to form a value "B". In the case of a received broadcast audio signal, the value A is formed from portions of the audio signal that were broadcast prior to those used to form the value B.

To form a bit of the signature, the values A and B are compared. If B is greater than A, the bit is assigned a value "1" and if A is greater than or equal to B, the bit is assigned a value of "0". Thus, during each time interval, two bits of the signature are produced.

One advantageous technique carries out either or both of code detection and signature extraction remotely from the location where the research data is gathered, as disclosed in US Published Patent Application 2003/0005430 published January 2, 2003 to Ronald S. Kolessar, which is assigned to the assignee of the present application and is hereby incorporated herein by reference in its entirety.

If location tracking or exposure to outdoor advertising is carried out, then various techniques for doing so are employed. Suitable techniques for location tracking or Monitoring exposure to outdoor advertising are disclosed in US Patent No 6,958,710 in the names of Jack K. Zhang, Jack C. Crystal, and James M. Jensen, issued October 25, 2005, and US Published Patent Application 2005/0035857 A1 published February 17, 2005 in the names of Jack K. Zhang, Jack C. Crystal, James M. Jensen and Eugene L. Flanagan III, filed August 13, 2003, all of which are assigned to the assignee of the present application and hereby incorporated by reference herein in their entireties.

Where usage of publications, such as periodicals, books, and magazines, is monitored, suitable techniques for doing so are employed, such as those disclosed in U.S. Patent Application No. 11/084,481 in the names of James M. Jensen, Jack C. Crystal, Alan R. Neuhauser, Jack Zhang, Daniel W. Pugh, Douglas J. Visnius, and Eugene L. Flanagan III, filed March 18, 2005, which is assigned to the assignee of the present application and hereby incorporated by reference herein in its entirety.

In addition to those types of research data mentioned above and the various techniques identified for gathering such types of data, other types of research data may be gathered and other types of techniques may be employed. For example, research data relating to consumer purchasing conduct, consumer product return conduct, exposure of consumers to products and presence and/or proximity to commercial establishments may be gathered, and various techniques for doing so may be employed. Suitable techniques for gathering data concerning presence and/or proximity to commercial establishments are disclosed in US Published Patent Application 2005/0200476 A1 published September 15, 2005 in the names of David Patrick Forr, James M. Jensen, and Eugene L. Flanagan 111, filed March 15, 2004, and in US Published Patent Application 2005/0243784 A1 published November 3, 2005 in the names of Joan Fitzgerald, Jack Crystal, Alan Neuhauser, James M. Jensen, David Patrick Forr, and Eugene L. Flanagan III, filed March 29, 2005. Suitable techniques for gathering data concerning exposure of consumers to products are disclosed in US Published Patent Application 2005/0203798 A1 published September 15, 2005 in the names of James M. Jensen and Eugene L. Flanagan III, filed March 15, 2004.

In light of the foregoing, and with further reference to figure 1, it is clear that providing a uniform signal acquisition front end, in the form of a discrete Monitor device like that 102 of figure 1, allows improved acquisition of survey data in certain embodiments of the invention. At the same time, the cost savings and flexibility associated with locating user interface and various processing functionality within a more standard user Appliance 104 is readily apparent.

Compliance enhancing characteristics of automatic data collection equipment, according to the present invention, include the ability to monitor and reward survey participant compliance. In one aspect of the present invention data monitoring functions are combined or hybridized with the functions of useful Appliances so that functionality of those Appliances can be incorporated into a compliance reward scheme. Thus, for example, a hybrid monitor including a monitoring portion and a cellular telephone portion can be arranged to allow enhanced, improved, reduced price or free communications to a survey participant in response to desirable survey compliance activities. Conversely, reverse reward (or punishment) responses can be implemented in the event of undesirable compliance activities. Thus, for example, a feature of a hybrid cellphone can be disabled in response to the failure of a survey participant to carry or properly employ a monitoring portion of a hybrid device.

Moreover, techniques involving the active participation of the panel members may be used in research operations. For example, surveys may be employed where a panel member is asked questions utilizing the panel member's Appliance after recruitment. Thus, it is to be understood that both the exemplary types of research data to be gathered discussed herein and the exemplary manners of gathering research data as discussed herein are illustrative and that other types of research data may be gathered and that other techniques for gathering research data may be employed.

Figure 2 shows a portion of a data collection system according to one embodiment of the invention. In figure 2 a Monitor 102 is operative to receive an environmental signal such as an audible or inaudible sonic signal. The Monitor 102 transduces the environmental signal to produce a further signal 106 which is received by an Appliance 104. The Appliance 104 transmits a further signal through a communications network 202 to a receiving device 204, which in turn passes information related to the received signal to a data storage and/or analysis device 206. In one exemplary embodiment of the invention, the Appliance 104 is a cellular telephone which receives signal 106 from the Monitor 102. According to the illustrated embodiment, the network 202 is generally adapted for communication with cellular telephones and like devices.

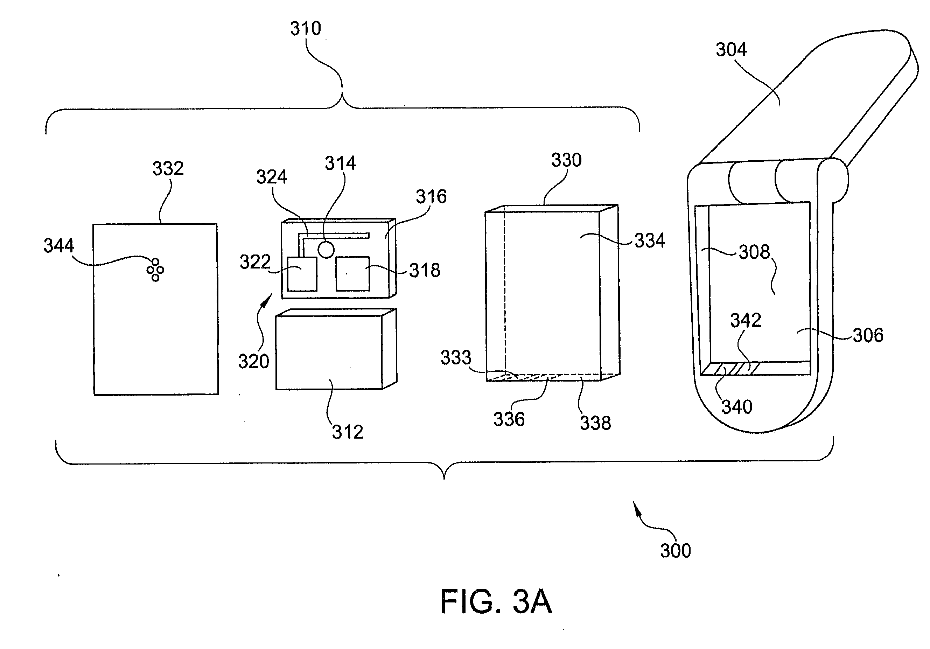

Figure 3A shows, in exploded perspective form, a portion of a data collection system 300 according to a further embodiment of the invention. As illustrated, the system includes an Appliance 304 such as a cellular telephone. The Appliance 304 includes a plurality of surfaces e.g., 308 that define a cavity 306 within the Appliance 304. The cavity 306 is adapted to receive a battery, or other power source, therewithin. According to one aspect of the present embodiment, the battery or other power source is replaced by a Monitor 310. Monitor 310 includes a further battery or other power source 312. In the illustrated embodiment, the battery or other power source 312 occupies a smaller volume than the volume of the cavity 306 and, in most circumstances, a smaller volume than the battery or other power source that the cavity 306 was designed to accommodate.

Monitor 310 also includes a transducer 314 adapted to receive an environmental signal. In the illustrated embodiment, the transducer 314 is a microphone, and is adapted to receive an audible or inaudible environmental sonic signal. It should be appreciated, however, that any of a wide variety of transducers, and corresponding signals, are to be employed according to various embodiments of the invention.

In the illustrated embodiment, transducer 314 is mechanically coupled to a substrate 316. The substrate 316 serves to couple transducer 314 to other components of the Monitor 310. In various embodiments, the substrate 316 includes at least one signal conductor such as, for example, a copper trace conductor. Accordingly, in various embodiments, the substrate includes a flexible printed circuit, a rigid printed circuit, a single-sided printed circuit, a double-sided printed circuit, a multilayer printed circuit and a fine line printed circuit. In certain of the embodiments, the signal conductor includes one or more of a microwave strip line conductor and an optical conductor such as, for example, an optical fiber signal conductor. In still other embodiments, the substrate 316 serves to provide mechanical sport, but does not include signal conducting devices. In such an embodiment, signals may be conducted wirelessly, by optical communication, or may be conducted through discrete electrical or optical fiber devices, for example.

According to various embodiments, the substrate 316 includes an electrically insulating material such as, for example, a synthetic polymer material. According to other embodiments, the substrate 316 includes a reinforcing material such as a glass fiber material. Accordingly, in one embodiment the substrate 316 includes a fiberglass reinforced epoxy material. In other embodiments, the substrate 316 includes a flexible material such as a flexible polyethylene terephthalate (PET) material (available, for example, as Mylar® from Dupont Tejjin Films) and in still another embodiment, the substrate 316 includes a ceramic material.

In one embodiment, the substrate 316 is mechanically coupled to the power source 312, and in another embodiment, the substrate 316 is integrally formed as a portion of the power source 312.

According to further aspects of the illustrated embodiment, the Monitor 310 includes a signal conditioning device 318. In the illustrated embodiment, the signal conditioning device includes an integrated circuit device. In various embodiments, the integrated circuit device includes an analog-to-digital conversion device, a memory device, and a processor device. In still another embodiment of the invention, the transducer 314 is not discrete, as illustrated, but is an integrated element of the signal conditioning device 318. According to one embodiment of the invention, the transducer 314 is a micro electromechanical system (MEMS) device.

In a further aspect of the illustrated embodiment, the Monitor 310 includes a communication device 320. The exemplary communication device 320 includes an integrated circuit device 322 and an antenna 324. According to one embodiment of the invention, the communication device 320 is a Bluetooth communication device. As discussed above, in various embodiments, a communication device adapted for other communication protocols, and for multiple communication protocols is also contemplated by the inventors.

As illustrated, the Monitor 310 includes a case portion 330 and a cover portion 332. In the illustrated embodiment, the case portion 330 is adapted to receive various active and passive components of the Monitor within a cavity region 234. In the illustrated embodiment of the invention, the case portion 330 includes first 334 and second 336 apertures, in one surface 338. The apertures 334, 336 are sized and configured to receive respect of electrical conductors therethrough. The electrical conductors serve to conduct electrical current from corresponding electrical contacts 340, 342 of the Appliance 304 through the aperture 334, 336 to and/or from the power source 312.

The cover portion 332 is adapted to be mechanically coupled to the case portion 330 so as to enclose and protect the various components of the Monitor within the cavity 334. According to one embodiment of the invention, the cover 332 includes a through-hole 344 adapted to facilitate the communication of a signal, such as a sonic signal, from an environment of the Appliance 304 to the transducer 314. In another embodiment of the invention, the cover includes a projecting member adapted to mechanically couple the cover 342 to the transducer 314. In one embodiment of the invention, the projecting member serves as a waveguide to couple a sonic signal from the environment to transducer 314.

In still another embodiment of the invention, the cover 332 includes a relatively thick region adapted to provide structural support to the cover and a relatively thin region adapted to allow communication of a sonic signal from an environment of the Appliance through the cover 322 to a medium, e.g., air, within cavity 334 and thereby to transducer 314. According to one embodiment of the invention a transducer, such as a microphone, is integrally formed as a portion of the cover 322. In another embodiments of the invention, a transducer, such as a microphone, is substantially permanently fixed to a surface of the cover 322 and/or is acoustically coupled to that cover.

According to one embodiment of the invention, the cover 332 is removably attached to the case portion 330, and is adapted for subsequent removal so as to allow replacement of one or more of the components, such as e.g., power source 312, disposed within the cavity 334. In one such embodiment of the invention, the cover 332 is coupled by a hinge portion to the case portion 330. In one embodiment, a sealing device is disposed between the cover 332 and the case portion 330. According to one embodiment, the sealing device includes an elastomeric gasket. In another embodiment, the sealing device includes an adhesive material. In still another embodiment, the sealing device includes a gel material and/or a natural or synthetic grease material.

In another embodiment of the invention, the cover 332 is substantially permanently coupled to the case portion 330. According to one such embodiment, the cover 332 is adapted to be coupled to the case portion by a fusion weld, by an ultrasonic weld, and/or by a fastener such as a rivet, a screw, a snap, a hook and loop device, or other fastening device as known in the art.

In various embodiments of the invention, the case portion 330 and/or cover 332 includes one or more of a synthetic polymer material, a natural polymer material, a filled polymer material, a metallic material including a metallic alloy, and a cellulosic material. In another embodiment of the invention, the substrate 316 is substantially permanently fixed to an interior surface region of the case 330 and in another embodiment, the substrate 316 is formed as an integral portion of the case 330. In a further embodiment of the invention, an interior surface region of the case 330 serves in place of substrate 316. In a still further embodiment of the invention the substrate 316 is formed as an integral portion of the cover 332 and, in another embodiment of the invention, an interior surface region of cover 332 serves in place of substrate 316.

In a further embodiment of the invention, various components of the Monitor 310 are potted within a material such as a polymer material according to a potting process as is known in the art, to form a potted device. According to one embodiment and of the invention, the potted device is disposed within the case cavity 334. According to a further embodiment of the invention, the potted device is disposed within Appliance cavity 306 and without a further enclosure. In one embodiment, a further cover is provided to retain the potted device within the cavity 306. In one embodiment, the further cover is an original cover as provided with the Appliance 304. In another embodiment the further cover is a replacement cover including, for example, an additional feature such as a through-hole 344.

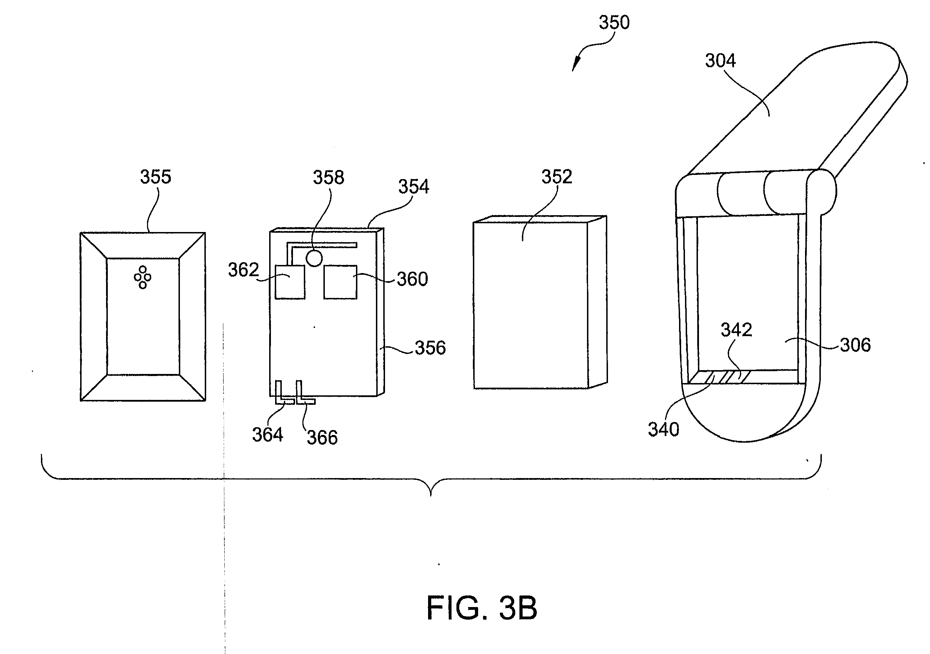

Figure 3B shows a further embodiment 350 of the invention in which an Appliance 304 includes a cavity 306 adapted to receive a battery, or other power source, therewithin. Conventional contacts 340, 342 are present within the cavity, and are adapted for electrical coupling to corresponding terminals of an exemplary battery 352.

A Monitor device 354 includes, for example, a cover 355, a substrate 356 supporting a microphone 358, a signal processing device 360 and a wireless transceiver such as a Bluetooth transceiver 362. First 364 and second 366 electrical contact devices are mechanically supported by the substrate 356. The first and second electrical contact devices are electrically coupled to various components of the Monitor device 354 so as to supply power from the battery 352 to the Monitor device 354.

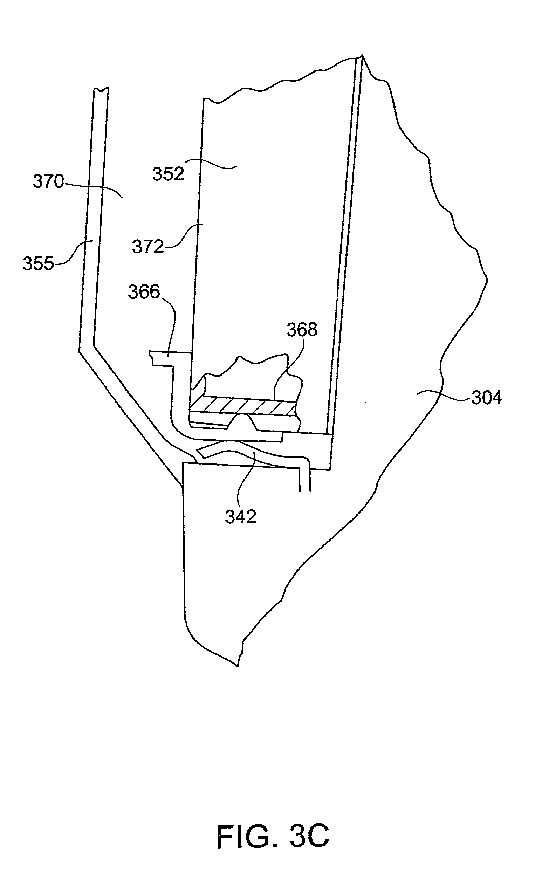

Figure 3C shows, in cutaway cross-sectional view, a portion of contact 366 during operation of the Monitor device 354. As shown, contact 366 is adapted to be disposed between contact 342 of the Appliance 304 and a corresponding terminal 368 of battery 352. By virtue of this arrangement, battery 352 is adapted to supply electrical power to both Appliance 304 and Monitor 354. As shown, a region 370 between an interior surface of cover 355 and a surface 372 of battery 352 is capacious enough to accommodate substrate 356 and the balance of the components of the Monitor device 354.

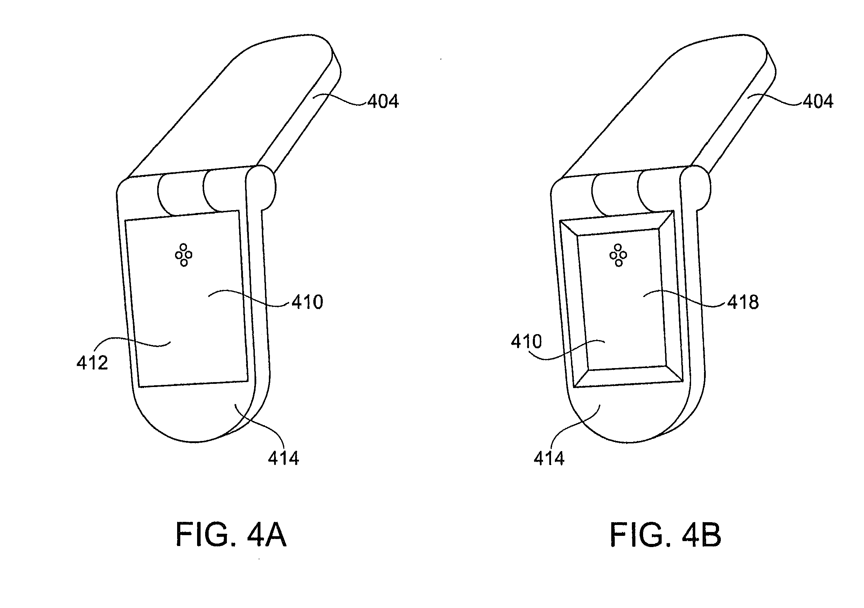

Figure 4A shows a further view of a combined Appliance 404 and Monitor 410 according to one embodiment of the invention. As shown, the Monitor 410 is disposed within a battery cavity of the Appliance 404. In the illustrated embodiment an outer surface region 412 of Monitor 410 is disposed substantially flush with respect to a further outer surface portion 414 of Appliance 404. Figure 4B shows another embodiment of the invention in which an outer surface region 418 of a Monitor 420 is disposed outwardly of surface region 414 of Appliance 404, such that Monitor 420 projects beyond the external surface region 414 of the Appliance 404. In a further embodiment of the invention, a surface region of a Monitor is disposed recessed with respect to surface portion 414, and in still another embodiment one portion of a surface region of a Monitor is disposed substantially flush with surface region 414 while another portion of the surface region of the Monitor projects or is recessed with respect to surface region 414.

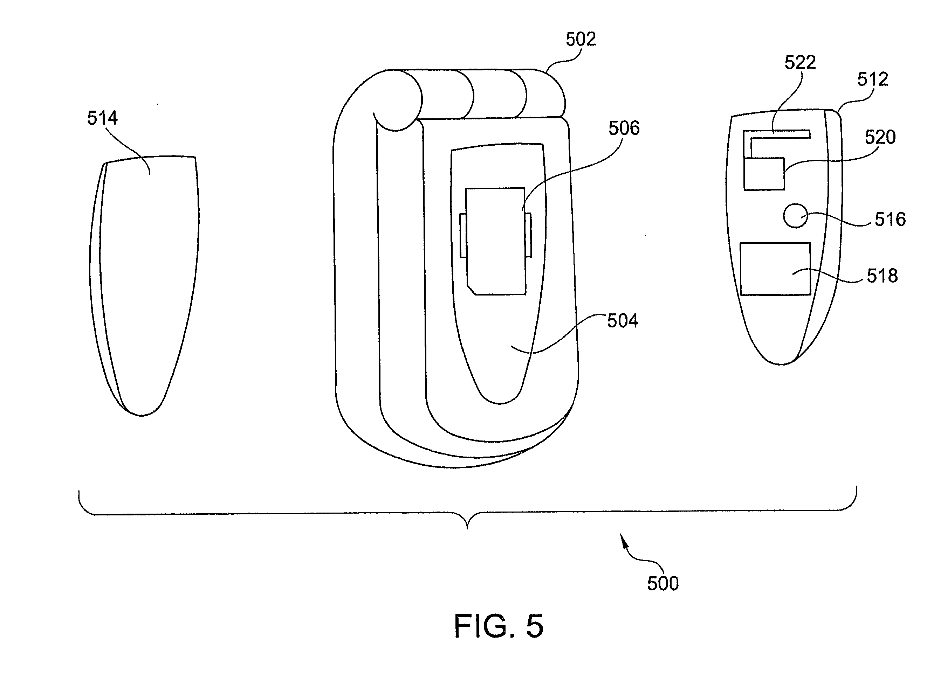

Figure 5 shows a further embodiment 500 of the invention including an Appliance 502 having a recessed compartment 504 adapted to contain a SIMM device 506. According to the illustrated embodiment, a Monitor 510 is configured as a compartment cover 512 for use in place of a conventional compartment cover 514. In the illustrated embodiment, compartment cover 512 includes a transducer 516, such as a microphone, a power supply device 518, such as a battery, and a communications device 520 including, for example, an antenna 522.

According to one embodiment of the invention, the communications device 520 is adapted communicate with the Appliance 502 by way of a Bluetooth communications protocol. According to one embodiment of the invention, the power supply device 518 is adapted to receive recharging power by coupling to an exposed electrical connection within compartment 504. According to another embodiment of the invention, the power supply device 518 is adapted to be removed for periodic replacement by a new or recharged power supply device.

In still another embodiment of the invention the power supply device 518 is adapted to be recharged in situ. Accordingly, in one embodiment of the invention, power supply device 518 is adapted to be recharged by direct wired coupling to an external charger device, and in another embodiment of the invention, the power supply device 518 is adapted to be recharged by an inductive coupling between the power supply device 518 and an external charger device.

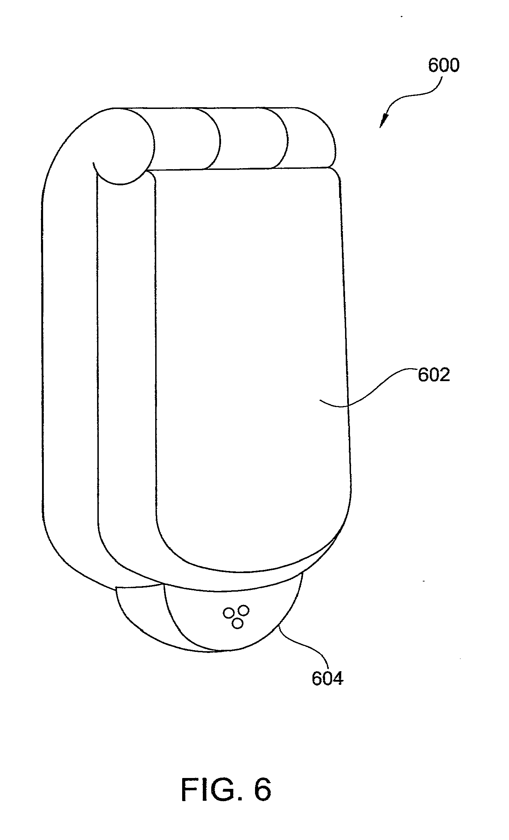

Figure 6 shows, in perspective view, a further embodiment 600 of the invention. As illustrated, this embodiment 600 includes an Appliance 602 and a Monitor 604. As illustrated, the Monitor 604 is adapted be externally coupled to the Appliance 602. According to one embodiment the invention, the Monitor 604 is coupled to a USB port of the Appliance 602. In other embodiments, the Monitor 604 is adapted to be coupled to a proprietary communications port of the Appliance 602. In still another embodiment, the Monitor 604 is adapted be coupled to a power supply port of the Appliance 602. In various embodiments, the Monitor 604 includes a further external port corresponding to the port of the Appliance 602 to which it is coupled, thereby providing pass-through access to the corresponding port of the Appliance 602. In one embodiment of the invention, as in the case of a USB port coupling for example, the Monitor is adapted to establish communications with the Appliance 602 by way of the port (here a USB port) of the Appliance 602.

In a further embodiment of the invention, as in the case of a USB port coupling or a power port coupling for example, the Monitor 604 is adapted to draw power from an external supply device in parallel with receipt of power from the external supply device by the Appliance 602. In a still further embodiment of the invention, the Monitor 604 is adapted to draw power through a coupling port from an internal power supply device, such as a battery, of the Appliance 602.

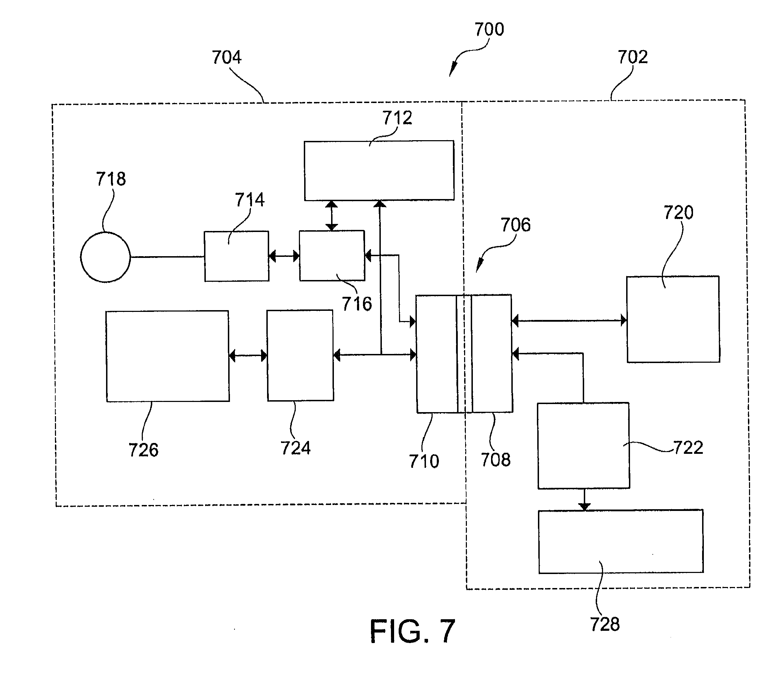

Figure 7 shows, in block diagram form, an embodiment 700 of the invention including an Appliance 702 coupled to a Monitor 704 at a port 706. The port 706 includes a first portion 708 associated with the Appliance 702 and a second portion 710 associated with the Monitor 704. In one exemplary embodiment, the first 708 and second 710 portions of the port are adapted to be electrically and mechanically coupled to one another so as to allow the passage of an electrical signal from one portion to the other.

In the illustrated embodiment, the Monitor 704 includes a further port device 712. The further port device 712 is adapted to be coupled to an external device such as, for example, a USB cable and/or a power supply cable. In the exemplary Monitor 704 of the illustrated system 700, port device 710 includes a communications portion coupled to a signal conditioner 714. In the illustrated embodiment, the communication portion of port device 710 is coupled to signal conditioner 714 through a signal manager device 716. The signal manager device 716 is adapted to control a coupling of signals between port device 710, port device 712, and signal conditioner 714. In one embodiment of the invention, signal manager device 716 includes a USB hub device. As per the illustrated embodiment, the signal conditioner 714 is signalingly coupled to a transducer such as a microphone 718 for receiving an environmental signal.

The first portion 708 of the port 706 is coupled to a communications portion 720 of the Appliance 702. Accordingly, in one embodiment, when the Monitor 704 is coupled to the Appliance 702 the substance of the environmental signal received a microphone 718 can be communicated through port 706 to communications portion 720. Thereafter, the substance of the environmental signal, or related information, can be transmitted from the Appliance 702 to a receiving device (such as receiving device 204 as shown in figure 2).

As illustrated in figure 7, Appliance 702 and Monitor 704 include respective power control devices 722, 724. The power control devices 722, 724 are coupled to respective power portions of port devices 708, 710. In addition, the power portion of port device 710 is coupled to a power portion of port device 712. In the illustrated embodiment, power portion 724 is electrically coupled to a power supply device, such as a battery 726, of the Monitor 704. In like fashion, power control device 722 is electrically coupled to a power supply device, such as a battery 728, of Appliance 702.

In various embodiments of the invention, a single power control device is used to control power for both the battery 726 of Monitor 704 and the battery 728 of Appliance 702. In still another embodiment of the invention no power control device is employed, and in another embodiment of the invention, a power control device is disposed externally to both the Monitor 704 and the Appliance 702.

In light of the disclosure of figure 7, one of skill in the art will appreciate that by coupling port 712 to, for example, a USB output port of a computer device, electrical power may be received at port device 712 and directed to power control device 724 for charging battery 726 and to power control device 722 for charging battery 728. In like fashion, a port may be configured so as to receive power from battery 728 at power control device 724 for charging battery 726 and/or for use in directly powering components of the Monitor 704 such as signal conditioner 714 and microphone 718.

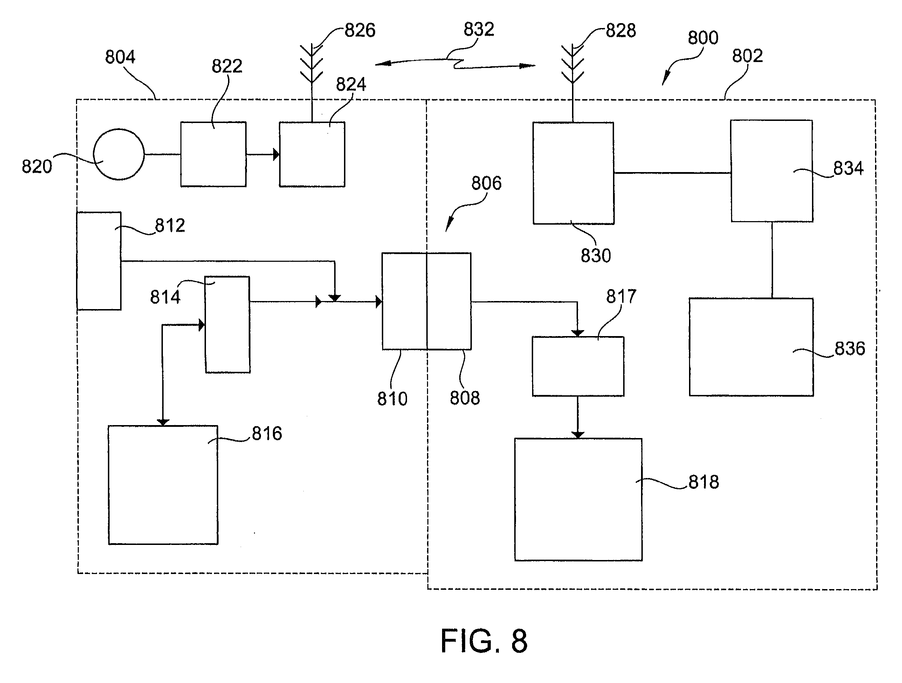

Figure 8 shows, in block diagram form, a further embodiment 800 of the invention. According to one embodiment illustrated by figure 8, an Appliance 802 is coupled to a Monitor 804 at a power port 806. The power port 806 includes a first power port device 808 associated with the Appliance 802 and a second power port device 810 associated with the Monitor 804. In use, the first 808 and second 810 power port devices are adapted to be electrically and mechanically coupled to one another. The Monitor includes a further input electrical power port device 812 that is electrically coupled to port device 810. In the illustrated embodiment, the input electrical power port device 812 is also electrically coupled through power control device 814 to power storage device (e.g., battery) 816. In like fashion, the electrical power port device 808 is coupled through power control device 816 to power storage device (e.g., battery) 818.

Like embodiment 700, the Monitor 804 of embodiment 800 includes a transducer such as a microphone 820 and a signal conditioner 822. Embodiment 800, however, provides a wireless communication link between Monitor 804 and Appliance 802. Accordingly, signal conditioner 822 is coupled to a communication device 824, such as e.g., a Bluetooth communication device. In the illustrated embodiment, the Bluetooth communication device 824 includes an antenna 826. The Bluetooth communication device 824 and antenna 826 are adapted to establish a communication link with a further antenna 828 and further communication device 830 for the transfer of a signal 832 between the Monitor 804 and the Appliance 802.

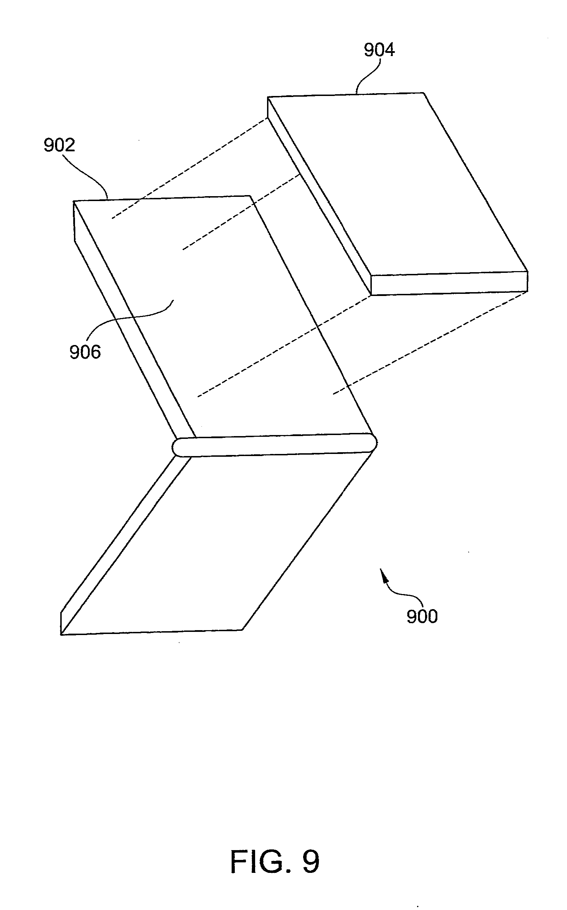

In one embodiment, a processor 834 receives information related to signal 832 and transfers that information to a further communication device 836. Accordingly, data can be passed to and from the Monitor 804 through communication device 830 and through a network 202 (as shown in figure 2). In another embodiment of the invention the function of communication device 836 is integrated with that of communication device 830 in a single device or subsystem. In still another embodiment of the invention communication between Monitor 804 and Appliance 802 can be effected both through a wireless signal (e.g. 832) and through a physical communication port (e.g., 706 as shown in figure 7). In one aspect of the invention, as discussed above, the combination of a Monitor and an Appliance, operating in communication with one another, can be used to motivate survey participant compliance. Thus, in one embodiment of the invention, the disclosed wireless coupling between a Monitor and an Appliance, in combination with a controlling feature of the Appliance, allows for a configuration of the Appliance in which the Appliance will not function or in which its functionality is limited or extended depending on being in general proximity to the Monitor device. In this way, survey compliance is motivated and/or facilitated. In a further aspect of the invention, according to various embodiments, the Monitor is included in, or associated with an otherwise useful device. A variety of such devices are illustrated in figures 9-16.

While the various embodiments discussed above relate to Monitors adapted for use in close proximity to a corresponding Appliance, it should be understood that one of the advantages of providing a Monitor device with wireless communication facilities is to allow the Monitor to be disposed relatively remote from the Appliance. With this in mind, figure 9 shows an embodiment 900 including an Appliance 902 and a Monitor 904. The Monitor 904 is adapted to be mechanically coupled adjacent to a surface 906 of the Appliance 902. In the illustrated embodiment, however, no electrical coupling is made between the Monitor 904 and the Appliance 902. Communications between the Monitor 904 and the Appliance 902 is effected by a wireless communication link such as, for example a Bluetooth communication link, a WiFi communication link, an alternative electromagnetic, sonic or optical communication link, or a combination thereof.

The mechanical coupling between the Monitor 904 and the Appliance 902 is effected, in respective embodiments, by a wide variety of fastening techniques including adhesive fastening such as hotmelt adhesive, adhesive tape, cyanoacrylate adhesive, contact adhesive; hook and loop fasteners (such as Velcro (R)); screws and other threaded fasteners; rivets including pop rivets; snaps; and other fastening devices as known in the art including combinations of the foregoing. In various embodiments of the invention, the coupling between Monitor 904 and Appliance 902 is such as to make Appliance 902 readily detachable from Monitor 904.

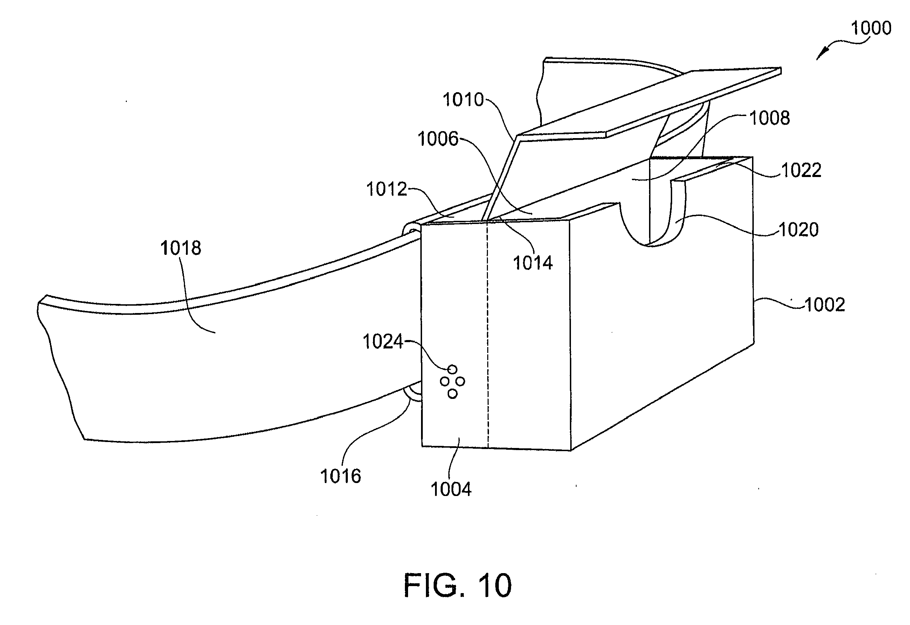

Figure 10 shows a portion of a further embodiment 1000 of the invention. Embodiment 1000 includes a holster device 1002 including a Monitor portion 1004. The holster includes a receptacle compartment 1006 defined by a plurality of internal surfaces 1008. The receptacle compartment 1006 is adapted to receive an Appliance, such as e.g., a cellphone, removably therewithin. According to one embodiment of the invention, the holster device 1002 includes a cover portion 1010 adapted to retain and protect an Appliance disposed within the receptacle compartment 1006.

According to the illustrated embodiment, the cover portion 1010 is pivotally coupled to an upper surface 1012 of the holster device 1002. In one embodiment, this pivotal coupling is effected by a hinge portion 1014. In one embodiment, the hinge portion 1014 includes an integral hinge of flexible material. In another embodiment, hinge portion 1014 includes a discrete hinge having a hinge pin. In still other embodiments, the hinge portion includes a synthetic polymer material, a natural polymer material, a woven textile material, an un-woven textile material, a leather material, and combinations thereof.

In a further aspect of the illustrated embodiment, the invention includes a loop 1016 for coupling the holster 1002 to a belt 1018 or other garment element. In alternative embodiments, the holster 1002 is coupled to a belt or other a garment element by a clip, a pin, a button, a snap, a hook and loop fastener, a tack and retainer combination, a magnet, a lanyard, a strap and/or another garment fastener as known in the art, and combinations thereof.

According to another aspect of the invention, as illustrated in embodiment 1000, the holster includes a cut-out 1020 adapted to facilitate removal of the Appliance from the receptacle compartment 1006. In another embodiment of the invention, a ribbon is provided to facilitate removal of the Appliance from the receptacle compartment 1006. The ribbon includes a first end substantially fixedly coupled to inner surface 1008 of the receptacle compartment, a second end adapted to protrude above an edge 1022 of the receptacle compartment and a longitudinal portion disposed between the first end and the second end and delete the Appliance with interceptor compartment 1006. In still another embodiment, the holster device 1002 includes a substantially rigid lifter having a J-shaped or an L-shaped portion adapted to elevate an Appliance out of receptacle compartment 1006.

According to one embodiment, a Monitor is disposed within a further receptacle compartment of the holster 1002. In one such embodiment the holster is provided with at least one through-hole 1024 adapted to allow the passage of an environmental sonic signal from a region outwardly of the holster 1002 into the further receptacle compartment. In one such embodiment of the invention, the holster includes a material such as, for example, a synthetic polymer material, an elastomeric polymer material, a foamed polymer material, a substantially rigid material, a cellulosic material, a leather material, a woven textile material, a knitted material, an unwoven textile material, a metallic material, a chain mail material and combinations thereof.

In a further embodiment of the invention, the holster 1002 is integrally formed with a case portion of the Monitor, and in one embodiment of the invention the various components of the Monitor are substantially permanently potted within the holster 1002. In further embodiments of such an integrally formed case portion, the case includes any one or more of the materials identified above, or another material such as is known to one of skill in the art.

According to the various embodiments discussed above with respect to figure 10, the Monitor is adapted to communicate with an Appliance, which Appliance is adapted to be received within the receptacle compartment 1006. According to one embodiment of the invention, this communication employs a Bluetooth communication protocol. According to another embodiment of the invention, this communication employs a WiFi communication protocol. In yet further embodiments of the invention this communication employs an alternative electromagnetic, sonic or optical communication link, or a combination thereof.

In one embodiment of the invention, the above-identified communication is controlled to take place only when the Appliance is disposed within the receptacle compartment 1006. In one such embodiment, a sensor is disposed within the receptacle compartment to sense a presence of the Appliance within the receptacle compartment. According to one embodiment, the sensor is signalingly coupled to a processor portion of the Monitor and adapted to permit communication between the Monitor and the Appliance when the Appliance is within the receptacle compartment.

In another embodiment of the invention the Monitor is adapted to communicate with the Appliance when the Appliance is generally in proximity to the holster. In various embodiments such proximity includes a distance of approximately 10 cm, 100 cm, 1000 cm, and 10,000 cm for example.

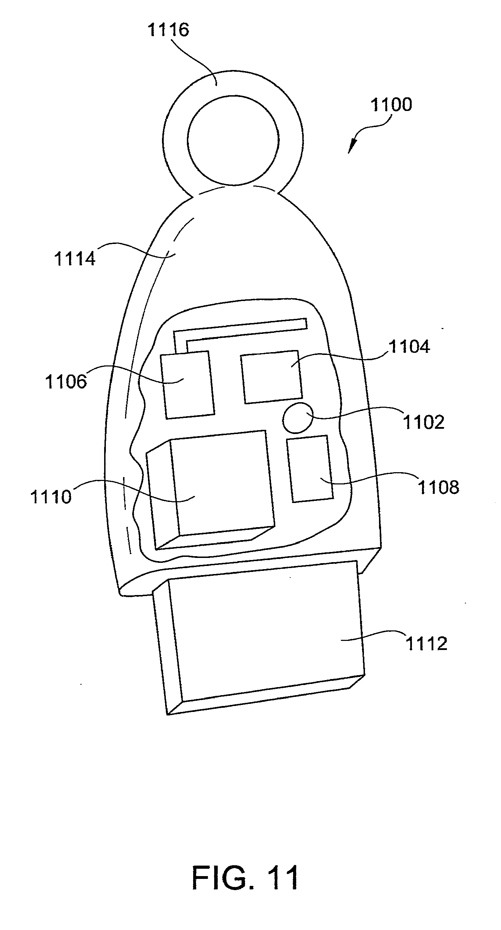

Figure 11 shows a further embodiment of the invention including a USB memory device 1100. In the illustrated embodiment a USB memory device 1100 is prepared including a transducer, such as a microphone 1102 a signal conditioner device 1104, a communications device 1106 a memory device 1108 and a power supply device such as a battery 1110. According to one embodiment of the invention, the memory device 1108 includes a flash memory device. In another embodiment of the invention, the memory device includes a magnetic memory device. In still another embodiment of the invention, the memory device includes a phase change memory device. In one aspect of the illustrated embodiment, the memory device is coupled to a USB interface device 1112.

In a further aspect of the invention, a body of the device 1114 includes a loop portion 1116. The loop portion 1116 is adapted to be coupled to any one of a lanyard, a watch chain, a necklace, a bracelet, a pin, a retracting cable, or any other securing or retaining device such as is known in the art. As with various examples of the embodiments described above, the transducer 1102 is adapted to receive an environmental signal such as a sonic signal and to produce a further signal, such as a Bluetooth signal for communication to an Appliance such as a cellular telephone. According to various embodiments of the invention, the reception of such a signal by the cellular telephone serves to communicate information regarding the environmental signal to a survey data collection system, so as to activate a participant reward system. In various embodiments, activation of the participant reward system results in, for example, a functionality or enhanced functionality of the Appliance.

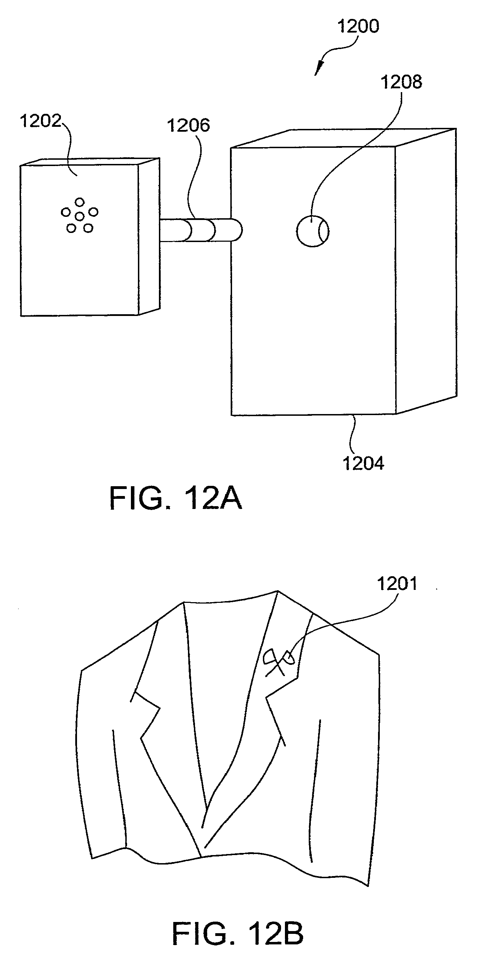

Figure 12A shows a portion of a further embodiment of the invention including a lapel pin Monitor device 1200. The lapel pin Monitor device 1200 is readily adapted for inclusion in a brooch, a tie tack, or a decorative lapel pin 1201 such as that shown in figure 12B. Referring again to figure 12A, the lapel pin device 1200 includes a first portion 1202 having a transducer device such as a microphone and a second portion 1204. According to one embodiment of the invention, the second portion 1204 is a passive mechanical retaining device. In another embodiment of the invention, as illustrated, the second portion 1204 includes various components of the Monitor device such as, for example, a signal conditioning device, a processor device, a power supply device such as a battery, a memory device and a Bluetooth communication device.

According to one embodiment of the invention, the first portion 1202 includes a signal coupling plug 1206, such as an electrical plug. As illustrated, the second portion 1204 includes a signal plug receptacle 1208 adapted to receive the signal plug 1206 therewithin. One of skill in the art will appreciate that the configuration could be reversed such that the receptacle portion is associated with Monitor portion 1202 while the plug portion is associated with Monitor portion 1204.

In use, the first Monitor portion 1202 and second Monitor portion 1204 are placed on opposite sides of a textile material such as a garment or accessory, and the plug portion 1206 is pressed through the textile material and into the plug receptacle 1208. Accordingly, the microphone or other transducer is positioned to receive an environmental signal. The transducer device produces a further signal corresponding to the environmental signal which is received within the second Monitor portion 1204. The second Monitor portion 1204 produces a still further signal, such as a WiFi or wireless signal for reception by an Appliance in the fashion discussed above.

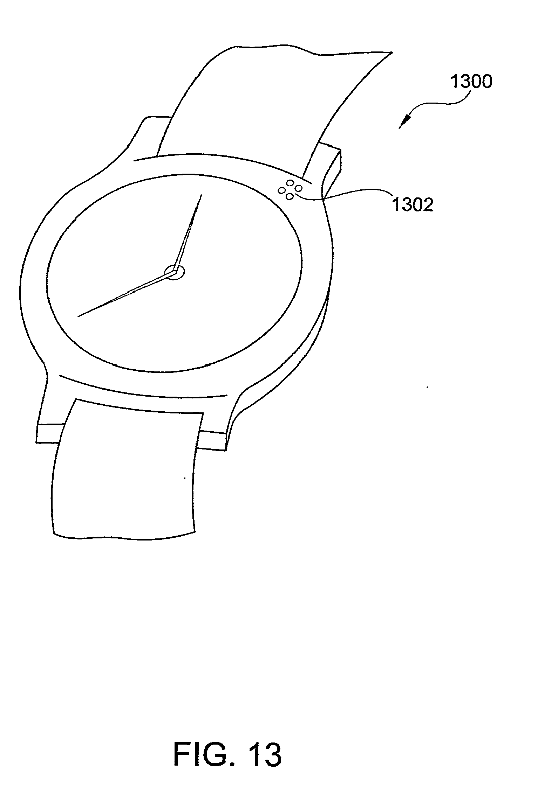

Figure 13 shows a portion of a further embodiment of the invention including a watch 1300. The watch includes a microphone 1302 and additional components of a Bluetooth-enabled Monitor, as described above. One of skill in the art will appreciate that the watch 1300 represents one of many possible embodiments of the invention in which a Bluetooth enabled Monitor is disposed within an article of jewelry.

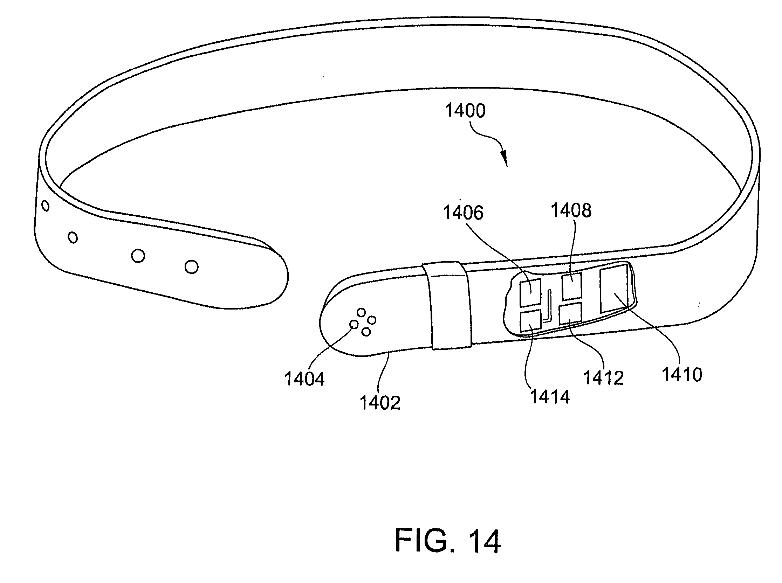

Figure 14 shows a portion of another embodiment of the invention including a belt 1400 having a buckle device 1402 incorporating a microphone or other transducer 1404. Further Monitor components including, for example, a signal conditioning device 1406, a processor device 1408, a power supply device such as a battery 1410, a memory device 1412 and a Bluetooth communication device 1414 are disposed within a flexible portion of the belt 1400. In one embodiment, a flexible printed circuit board device is disposed within the flexible portion of the belt 1400 and coupled to various components of the Monitor device.

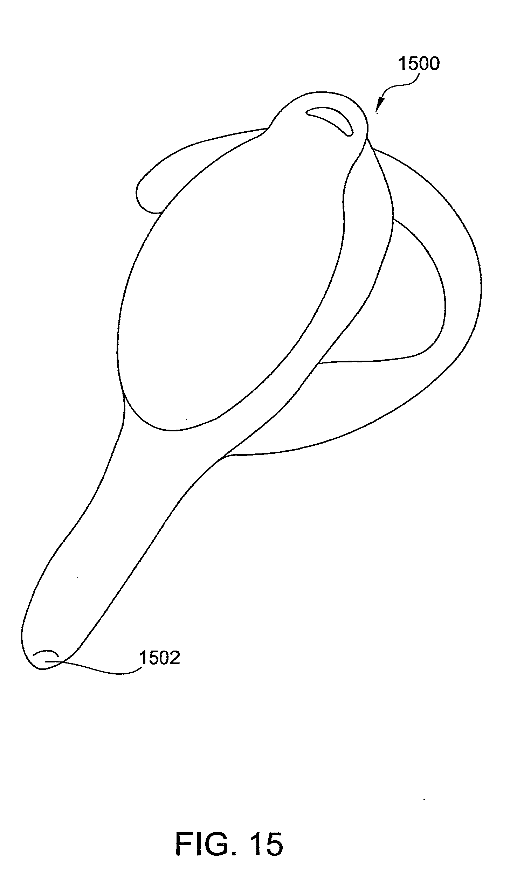

Figure 15 shows, in perspective view, a Monitor device mutually configured with a Bluetooth earpiece device 1500. Bluetooth earpieces and headsets are known for communication with existing Appliances such as, for example, cellular telephones and PDAs. According to one embodiment of the invention, an ear piece (or headset) is prepared including a Monitor functionality. According to one embodiment of the invention, the Bluetooth ear piece 1500 includes a microphone 1502 adapted to receive both a verbal communications signal, for transmission to the cellular Appliance, and an audible or inaudible sonic media identification signal for identification of media content present in a survey participant's environment.

According to one embodiment of the invention, the microphone 1502 is adapted to receive the verbal communication signal and the media identification signal concurrently. In a further aspect of the invention, a Bluetooth communication facility of the ear piece 1500 is adapted to communicate both verbal communication information and media identification information to an Appliance.

In another aspect of the invention, a processor device, such as a digital signal processor device within the ear piece 1502 is adapted to identify and segregate the verbal communication signal and the media identification signal so as to allow transmission of the two signals in respective discrete data packets according to the Bluetooth communication protocol.

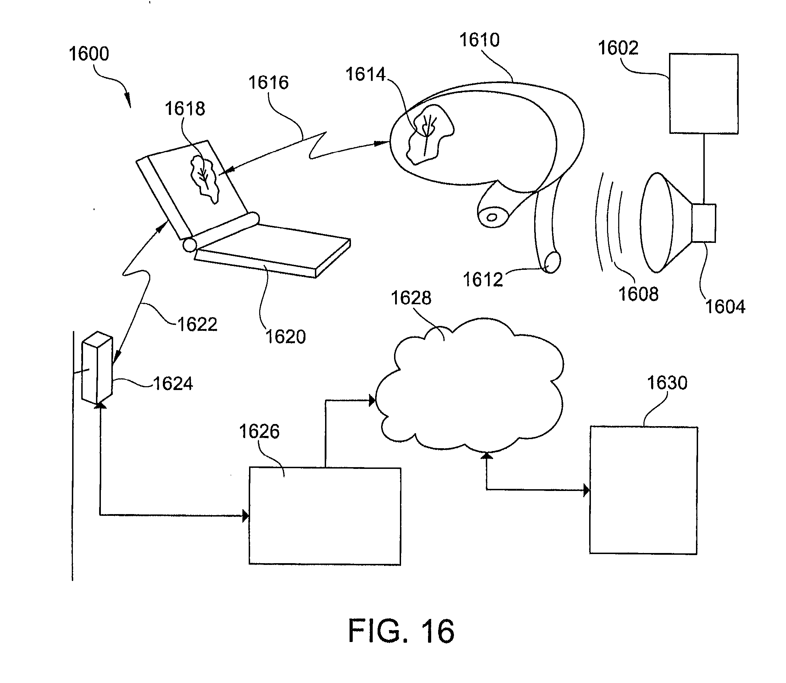

Figure 16 provides a schematic illustration of the Bluetooth earpiece in the context of a portion of a media data collection system 1600. According to the illustrated embodiment, a media device, such as, for example, a radio or television 1602 drives and sonic transducer (e.g., a speaker 1604) to produce a sonic signal 1608. The sonic signal 1608 includes an audible media content component and an inaudible media identification component. A Bluetooth earpiece device 1610, worn or carried by a media survey participant, detects the sonic signal 1608 at a microphone 1612.

Within the earpiece 1610 an analog to digital converter receives an analog electrical signal produced by the microphone 1612 and produces a digital electrical signal. The digital electrical signal is received into a digital signal processor device which applies a Fast Fourier Transform (FFT) to the received digital electrical signal and extracts a further signal corresponding to the media identification component of the sonic signal 1608. According to one embodiment, information related to the media identification component, and in some embodiments ancillary information such as timestamp information, is stored in a memory buffer device within the ear piece 1610. Thereafter, the stored information is retrieved from the memory buffer device and received at communication device such as a Bluetooth communication device.

The Bluetooth communication device prepares communication data packets according to the Bluetooth protocol (or, in other embodiments, alternative communication protocols) and produces a corresponding driving signal in a Bluetooth antenna 1614. An electro-magnetic signal 1616 is consequently radiated by the Bluetooth antenna. Electromagnetic signal 1616 is received at a further Bluetooth antenna 1618 of an Appliance 1620, (here shown as a cellular telephone). In one embodiment of the invention, the media identification information received at the Appliance 1620 is stored in a memory device of the Appliance 1620 and thereafter transmitted by a signal 1622. Signal 1622 is produced according to a cellular telephone communication protocol and received at an antenna 1624 of a cellular telephone base station 1626. From the cellular telephone base station 1626 the media identification information is transferred through a general telephone network 1628 to a survey data collection system 1630 for collection and analysis.

In an alternative embodiment, the FFT analysis and media identification signal extraction referred to above is conducted in a processor of the Appliance 1620, rather than in the ear piece 1610. In still another embodiment, any of the encoding schemes described above, or as otherwise known to one of skill the art, is used along with, or in place of FFT analysis.

According to one embodiment of the invention, responsive to receipt and analysis of the media identification information at the survey data collection system 1630, a reward control signal is transmitted from the survey data collection system 1630 through telephone network 1628 and base station 1626 to Appliance 1620. Depending on a possible delay between response of the media information signal and transition of the reward control signal, the media identification signal and the reward control signal may pass through different cellular telephone base stations.

Receipt of the reward control signal at the Appliance 1620 produces one or more of a wide variety of possible reward actions depending on a particular embodiment of the invention. In various embodiments, receipt of the reward control signal at the Appliance 1620 allows a survey participant to conduct a free or reduced price communication using the Appliance 1620. In another embodiment of the invention, receipt of a reward control signal allows the survey participant to download and/or activate an entertainment reward, such as a video game, for example, within the Appliance 1620. In another embodiment of the invention, receipt of a reward control signal initiates or allows a display of a reward tally on a display device of the Appliance 1620.

In one embodiment of the invention, the Appliance 1620 includes a communication device integral to an automotive device such as an automobile. In such an embodiment, receipt of the reward signal at the Appliance 1620 activates or indicates a reward associated with use of the automobile. For example, receipt of a reward control signal can be used to modify a record of a carbon or other emission ration counting device associated with the automobile. Still another embodiment allows downloading of media content, such as desirable music or other media content or communication to the Appliance 1620.

Numerous types of research operations are possible in accordance with the various embodiments of the invention disclosed above. These include, without limitation, television and radio program audience measurement; exposure to advertising in various media, such as television, radio, print and outdoor advertising, among others; consumer spending habits; consumer shopping habits including the particular retail stores and other locations visited during shopping and recreational activities; travel patterns, such as the particular routes taken between home and work, and other locations; consumer attitudes, awareness and preferences; and so on.

For the desired type of media and/or market research operation to be conducted, particular activity of individuals is monitored, or data concerning their attitudes, awareness and/or preferences is gathered. In addition various other environmental data collection efforts will benefit from the apparatus, method and system of the present invention. For example data reflecting participant exposure to environmental factors including radiation, chemical agents and biological agents and biological agents can be collected more effectively by employing appropriate embodiments of the present invention. In certain embodiments research data relating to two or more of the foregoing are gathered, while in others only one kind of such data is gathered.

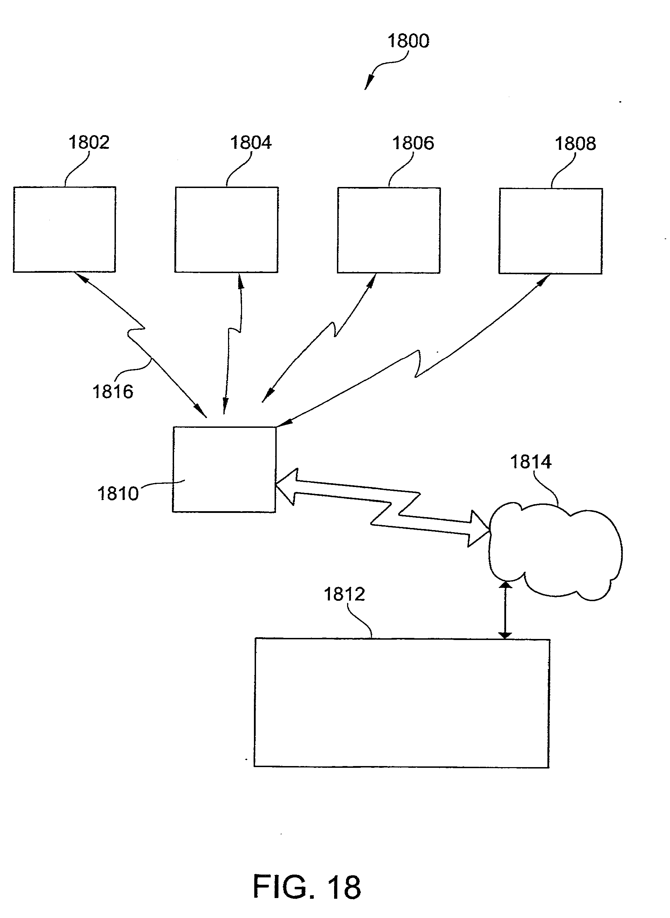

Figure 18 shows, in block diagram form, a portion of a further embodiment 1800 the invention. According to embodiment 1800, each of a plurality of monitor devices 1802, 1804, 1806, 1808 is equipped with a wireless communication facility such as, for example, a Bluetooth communication facility. Thus in one exemplary embodiment, each of monitor devices 1802, 8004, 1806 and 1808 include respective sensor portions, communication devices, and power sources as shown and described with respect to figure 2 above. According to one embodiment of the invention the plurality of monitor devices 1802, 1804, 1806 and 1808, communicate wirelessly with a common appliance 1810.

According to one embodiment of the invention, the appliance is a Bluetooth-enabled appliance. In a further embodiment of the invention, the appliance is a Bluetooth-enabled smart phone, in still another embodiment of the invention, the plurality of monitor devices 1802, 1804, 1806 and 1808 are adapted to communicate wirelessly with appliance 1810 according to an IEEE 802.11 WiFi protocol. In one embodiment of the invention, the plurality of monitor devices 1802, 1804, 1806 and 1808 are assigned to respective individual survey participant, where each of individual survey participants is likely to be periodically in proximity to the appliance 1810. Thus, in one embodiment, individual survey participants residing in a common home, or working in a common workplace are assigned to carry respective monitor devices 1802-1808.

In one embodiment, the individual survey participants include members of a single family. In one embodiment of the invention, the appliance 1810 is not a portable appliance, but is substantially fixed in place, any one embodiment of the invention the appliance 1810 is a personal computer device. According to various embodiments of the invention, appliance 1810 provides connectivity for the monitor devices 1802-1808 to a data collection device 1812 by way of a communications network 1814 such as, for example, a cell phone communications network.

According to one embodiment of the invention, one or more of Monitor devices 1802-1808 includes a memory device adapted to store acquired data during a time interval when the monitor device is not in proximity to the appliance. Thereafter, when the monitor device is in proximity to the appliance, data is received at the appliance from the monitor by, for example Bluetooth communication 1816. The received data is thereafter stored and/or transferred by the appliance 1810 to the data collection device 1812.

While the exemplary embodiments described above have been chosen primarily from the field of media consumption research systems, one of skill in the art will appreciate that the principles of the invention are equally well applied, and that the benefits of the present invention are equally well realized in a wide variety of other research systems including, for example, environmental chemical, biological and/or radiological agent sensing systems. Further, while the invention has been described in detail in connection with the presently preferred embodiments, it should be readily understood that the invention is not limited to such disclosed embodiments. Rather, the invention can be modified to incorporate any number of variations, alterations, substitutions, or equivalent arrangements not heretofore described, but which are commensurate with the spirit and scope of the invention. Accordingly, the invention is not to be seen as limited by the foregoing description, but is only limited by the scope of the appended claims.

## Claims

1. A monitor for data acquisition comprising: a sensor portion; and a communications portion, said communications portion being signalingly coupled to said sensor portion, said communications portion being adapted to transmit a wireless signal to an appliance, said wireless signal being related to an environmental signal detected by said sensor portion, wherein said sensor portion and said communications portion are mutually mechanically coupled to a common substrate, and wherein said common substrate is adapted to be disposed within a battery compartment of said appliance.

2. A monitor as defined in claim 1 wherein said substrate is mechanically coupled to a battery compartment cover, said battery compartment cover being adapted to be coupled adjacent to a battery compartment of said appliance.

3. A monitor as defined in claim 1 wherein said substrate includes a battery compartment cover, said battery compartment cover being adapted to be coupled adjacent to a battery compartment is an appliance.

4. A monitor as defined in claim 1 further comprising a power supply device said power supply device being coupled to said communications portion, said power supply device being adapted to energize said communications portion.

5. A monitor as defined in claim 4 wherein said power supply device is adapted to energize at least a portion of the appliance.

6. A monitor as defined in claim 4 wherein said power supply device is adapted to receive and store electrical energy, and electrical energy being received through a recharging circuit of said appliance.

7. A monitor as defined in claim 1 wherein said wireless signal comprises a signal according to a Bluetooth protocol.

8. A monitor as defined in claim 1 wherein said wireless signal comprises an IEEE 802.11 WiFi signal.

9. A monitor as defined in claim 1 wherein said sensor portion comprises a microphone.

10. A monitor as defined in claim 4 wherein said microphone comprises a MEMS device.

11. A monitor as defined in claim 1 wherein said sensor portion comprises a plurality of microphones.

12. A monitor as defined in claim 1 wherein said sensor portion comprises a detector for detecting an environmental signal.

13. A system for data acquisition comprising:
a plurality of monitors equipped for wireless communication; and
an appliance equipped for wireless communication, said appliance being adapted to communicate with each of said plurality of monitors.
